# EUROPÄISCHE PATENTANMELDUNG

(11) **EP 3 614 406 A1**
(43) Veröffentlichungstag der Anmeldung: **26.02.2020**
(21) Anmeldenummer: 19182471.3
(22) Anmeldetag: 26.06.2019
(51) Int. Cl.: H01F 41/02, B21D 43/22, B65G 61/00, F16B 5/02, F16B 19/02

(54) **FÄDELBOLZEN SOWIE KERNLEGETISCH, AUFBAUPLATTFORM, ABSTAPELVORRICHTUNG O.DGL. MIT MINDESTENS EINEM FÄDELBOLZEN**

(30) Priorität: 23.08.2018 DE 102018120557
(71) Anmelder: Heinrich Georg GmbH Maschinenfabrik, 57223 Kreuztal (DE)
(72) Erfinder: FRIEDRICH, Jost, 57271 Hilchenbach (DE); LOTH, Volker, 57258 Freudenberg (DE); FÜNFSINN, Thomas, 57258 Freudenberg (DE); GRÜBENER, Marc, 57250 Netphen (DE)
(74) Vertreter: advotec.

(57) **Zusammenfassung**

Fädelbolzen (1) zum Abstapeln von mit mindestens einem Fädelloch (2) versehenen Blechen, insbesondere Kernblechen (3) von Transformatorkernen, auf einem Kernlegetisch (4), einer Aufbauplattform, an einer Abstapelvorrichtung o.dgl., wobei mindestens ein Fädelbolzen (1) auf dem Kernlegetisch (4), der Aufbauplattform, der Abstapelvorrichtung o.dgl. positionierbar ist, wobei der Außendurchmesser (Dₐ) des Fädelbolzens (1) an unterschiedliche Innendurchmesser (d;) der Fädellöcher (2) anpassbar ausgebildet ist.

## Beschreibung

Die Erfindung betrifft einen Fädelbolzen zum Abstapeln von mit mindestens einem Fädelloch versehenen Blechen, insbesondere Kernblechen von Transformatorkernen, auf einem Kernlegetisch, einer Aufbauplattform, an einer Abstapelvorrichtung o.dgl., wobei mindestens ein Fädelbolzen auf dem Kernlegetisch, der Aufbauplattform, der Abstapelvorrichtung o.dgl. positionierbar ist. Ferner betrifft die Erfindung einen Kernlegetisch, eine Aufbauplattform o.dgl. mit mindestens einem Fädelbolzen.

Transformatorkerne bestehen in der Regel aus einer Vielzahl von Kernblechen. Bei der Herstellung von Transformatorkernen werden die Kernbleche kontinuierlich von einer Vorratsrolle abgerollt, nachfolgend mit einer Schneidanlage auf Länge und Form geschnitten sowie ggf. mit mindestens einem Fädelloch versehen und anschließend auf dem Kernlegetisch, der Aufbauplattform o.dgl. abgestapelt. Dabei ist eine exakte horizontale Lage der einzelnen Kernbleche zueinander für die Güte des fertigen Transformators wesentlich. Die auf dem Kernlegetisch, der Aufbauplattform o.dgl. positionierbaren Fädelbolzen in Verbindung mit dem Fädelloch bzw. den Fädellöchern in den Kernblechen sorgen beim Abwerfen der beispielsweise magnetisch oder mittels eines Vakuums an einer Zuführeinrichtung gehaltenen Kernbleche für eine exakte Positionierung derselben auf dem Kernlegetisch, der Aufbauplattform o.dgl..

Verschiedene Bauformen von Transformatoren sowie unterschiedliche Kerndesigns erfordern unterschiedliche Durchmesser der Fädellöcher sowie unterschiedliche Positionen derselben in den Kernblechen. Die verschiedenen Durchmesser der Fädellöcher liegen dabei in der Regel im Bereich von 8 mm bis 55 mm. Daher ist es bei der Herstellung von Transformatorkernen notwendig, vor jedem Abstapeln von neuen Kernblechen bzw. vor jedem neuen Kernlegen die den Durchmesser der Fädellöcher entsprechenden Fädelbolzen auf dem Kernlegetisch, der Aufbauplattform o.dgl. neu zu positionieren.

Aus der Vielzahl der vom Kerndesign abhängigen Möglichkeiten in Bezug auf die Durchmesser der Fädellöcher im Kernblech ergibt sich eine sehr große Anzahl von Fädelbolzen mit unterschiedlichen Durchmessern, die sämtlich bevorratet werden müssen.

Der Erfindung liegt die Aufgabe zugrunde, einen Fädelbolzen der angegebenen Gattung bzw. einen Kernlegetisch, eine Aufbauplattform o.dgl. zu schaffen, mit denen bzw. der ein Abstapeln von Kernblechen für unterschiedliche Transformatorkerne möglich ist, ohne dass ein Austausch der Fädelbolzen wegen unterschiedlicher Durchmesser von Fädellöchern erfolgen muss, wobei die Bereithaltung von unterschiedlichen Fädelbolzen wesentlich reduziert ist und somit auch die Kosten für die Herstellung von Transformatorkernen verringert sind.

Die Aufgabe wird erfindungsgemäß durch einen Fädelbolzen mit den Kennzeichnungsmerkmalen des Patentanspruchs 1 bzw. durch einen Kernlegetisch, eine Aufbauplattform, eine Abstapelvorrichtung o.dgl. mit den Kennzeichnungsmerkmalen des Patentanspruchs 16 gelöst. Zweckmäßige Weiterbildungen der Erfindung sind in den Unteransprüchen gekennzeichnet.

Bei dem erfindungsgemäßen Fädelbolzen ist der Außendurchmesser desselben an unterschiedliche Innendurchmesser der Fädellöcher anpassbar ausgebildet. Durch die Anpassung des Außendurchmessers des Fädelbolzens an die jeweiligen Fädellöcher können unterschiedliche Transformatorkerne mit Fädelbolzen erstellt werden, die einen bestimmten Durchmesserbereich abdecken, wodurch die Anzahl von zu bevorratenden Fädelbolzen stark reduziert ist und Kosten eingespart werden können. Ferner ermöglicht die Anpassung bzw. eine Vergrößerung des Außendurchmessers des Fädelbolzens im unteren Kernblechstapelbereich ein Nachdrücken der Kernbleche in die Sollposition.

Eine Verringerung des Außendurchmessers des Fädelbolzens hingegen erleichtert ein Entnehmen der Fädelbolzen nach der Fertigstellung des Kernblechstapels, da ein Reiben der Fädelbolzen an den einzelnen Lochkanten der Kernbleche ausgeschlossen ist. Zudem entstehen bei engen Abmaßen zwischen den Außendurchmessern der Fädelbolzen zu den Innendurchmessern der Fädellöcher keinerlei Beschädigungen an den Lochkanten durch das Herausziehen der Fädelbolzen, was auch für das Eintauchen der Fädelbolzen in die Fädellöcher zutrifft.

Der Fädelbolzen kann ein mit dem Kernlegetisch, der Aufbauplattform, der Abstapelvorrichtung o.dgl. lösbar verbindbares Fußteil, einen sich oberhalb des Fußteils vertikal erstreckenden Zentrierteil und eine am oberen Ende des Fädelbolzens vorgesehene Zentrierspitze aufweisen. Mittels des Fußteils erfolgt die Positionierung des Fädelbolzens auf dem Kernlegetisch, der Aufbauplattform, der Abstapelvorrichtung o.dgl., wobei der Fußteil zudem für die Ablage der Kernbleche bzw. der Kernblechstapel vorgesehen ist. Sofern der Fädelbolzen an der Abstapelvorrichtung angebracht ist, befindet sich der Fädelbolzen oberhalb einer Aufbauplattform oder einem Kernlegetisch, wobei der Fädelbolzen von oben in Fädellöcher des Kernblechstapels eintauchen kann um eine Nachzentrierung der Fädellöcher bzw. des Kernblechstapels zu ermöglichen. Der Zentrierteil des Fädelbolzens sorgt für die exakte Lage der Kernbleche, wobei durch die Zentrierspitze eine größere Ablegetoleranz für die abzulegenden Kernbleche über dem Fädelbolzen ermöglicht wird, durch die weitere Kosten eingespart werden, da eine exakte Positionierung der Kernbleche nicht notwendig ist.

Mindestens ein sich über einen Teilbereich des Zentrierteils erstreckender, längsverlaufender Abschnitt kann in radialer Richtung verstellbar sein, wodurch eine Anpassung des Außendurchmessers des Fädelbolzens zumindest in dem Teilbereich an die Innendurchmesser der Fädellöcher möglich ist.

Bei einer ersten Ausführungsform des Fädelbolzens kann derselbe mindestens in dem sich über den Teilbereich des Zentrierteils erstreckenden, längsverlaufenden Abschnitt einen Hohlraum aufweisen, der über eine sich vom unteren Ende des Fädelbolzens zu dem Hohlraum erstreckende Anschlussbohrung zur Veränderung des Außendurchmessers des Fädelbolzens mit einem fluiden Medium beaufschlagbar sein kann. Durch das Einbringen des fluiden Mediums in den Hohlraum und den auf die durch den Hohlraum gebildete relativ dünne Wandung wirkenden Druck wird der Hohlraum aufgeblasen und die umlaufende Wandung an die Innendurchmesser der Fädelbolzen angepasst oder auch angeformt.

Die Wandung des Fädelbolzens kann in dem sich über den Teilbereich des Zentrierteils erstreckenden, längsverlaufenden Abschnitt bzw. im Bereich des Hohlraums elastisch ausgebildet sein. Die elastische Ausbildung ermöglicht ein relativ leichtes Aufblasen des Hohlraums bei geringem Druck und eine einfache Verformung bzw. Anformung der umlaufenden Wandung.

Der sich über den Teilbereich des Zentrierteils erstreckende, längsverlaufende Abschnitt des Fädelbolzens kann aus einzelnen längsverlaufenden Segmenten gebildet sein, wobei in den Hohlraum eine gummiartige Blase einsetzbar sein kann, deren Öffnung über die Anschlussbohrung mit dem fluiden Medium beaufschlagbar ist. Die Blase bildet hier den elastischen Teil des Hohlraums, wobei die längsverlaufenden Segmente für einen Schutz der Blase beim Abstapeln der Kernbleche sorgen.

Bei einer zweiten Ausführungsform des Fädelbolzens kann der Zentrierteil desselben aus einem auf dem Fußteil angeordneten Führungsteil und mindestens zwei in dem Führungsteil gelagerten, in radialer Richtung verschiebbar geführten Zentriersegmenten gebildet sein, wobei die Zentriersegmente gemeinsam zur Veränderung des Außendurchmessers des Fädelbolzen mittels eines fluiden Mediums oder mechanischer Krafteinwirkung horizontal verstellbar sein können.

Der Zentrierteil des Fädelbolzens kann bei einer dritten Ausführungsform aus mindestens zwei in dem Fußteil gelagerten, in radialer Richtung verschiebbar geführten Zentriersegmenten gebildet sein, wobei die Zentriersegmente gemeinsam zur Veränderung des Außendurchmessers des Fädelbolzens mittels eines fluiden Mediums oder mechanischer Krafteinwirkung horizontal verstellbar sein können.

Bei diesen beiden Ausführungsformen sorgt der Druck des fluiden Mediums bzw. die mechanische Krafteinwirkung für eine einfache Anpassung bzw. ggf. auch Anformung des Zentrierteils bzw. der Zentriersegmente an die Innendurchmesser der Fädelbolzen.

In dem Führungsteil bzw. in dem Fußteil können Führungselemente für die Zentriersegmente vorgesehen sein, die ein leichtes radiales Verschieben der Zentriersegmente ermöglichen.

Vorzugsweise können radiale Mittelachsen der Zentrierelemente in einem Winkel von 120° zueinander angeordnet sein, wodurch eine exakte zentrische Lage der Fädellöcher und eine exakte Lage der Kernbleche jederzeit gewährleistet sind.

Das fluide Medium kann entweder gasförmig oder flüssig sein.

Die mechanische Krafteinwirkung auf die Zentriersegmente kann beispielsweise über längsverschiebbare keilförmige Elemente erfolgen, wobei die keilförmigen Elemente rotatorisch oder linear angetrieben bzw. verschoben werden können.

Alternativ dazu kann die mechanische Krafteinwirkung auf die Zentriersegmente über Gelenksysteme erfolgen, wobei die Gelenksysteme rotatorisch oder linear angetrieben werden können. Dabei können die Gelenksysteme mehrgliedrig ausgebildet sein.

Zur Begrenzung der maximalen Verstellbarkeit der Zentriersegmente können Anschläge vorgesehen sein, die eine Verstellung der Zentriersegmente über den maximal möglichen Außendurchmesser des Fädelbolzens bzw. des Zentrierteils desselben hinaus und ein Herausgleiten der Zentriersegmente aus den Führungselementen heraus verhindern.

Eine Rückstellung der Zentriersegmente in deren innere Grundposition kann federbelastet erfolgen, so dass gewährleistet ist, dass die abgelegten Kernbleche nicht auf dem oberen Ende der Fädelbolzen aufliegen und insbesondere zum Nachdrücken der Kernbleche in deren Sollposition sich die Zentriersegmente in deren inneren Grundposition befinden.

Die Zentriersegmente können einstückig an dieselben angeformte Blechauflagen aufweisen, die für eine saubere Auflage der Kernbleche bzw. des Kernblechstapels sorgen.

Der erfindungsgemäße Kernlegetisch, die erfindungsgemäße Aufbauplattform, die erfindungsgemäße Abstapelvorrichtung o.dgl. sind mit mindestens einem Fädelbolzen nach Anspruch 1 ausgestattet. Vorteilhafte Ausführungsformen des Kernlegetisches, der Aufbauplattform, der Abstapelvorrichtung o.dgl. ergeben sich aus den auf den Anspruch 1 rückbezogenen Unteransprüchen.

Nachfolgend werden anhand der schematischen Zeichnungen Ausführungsbeispiele des Fädelbolzens bzw. des Kernlegetisches, der Aufbauplattform, der Abstapelvorrichtung o.dgl. näher erläutert.

Es zeigen
- **Fig. 1**: eine Draufsicht auf ein Kernblech mit zwei Fädellöchern,
- **Fig. 2**: eine Darstellung der positionsgerechten Stapelung von geschnittenen Kernblechen mit Fädelbolzen gemäß dem Stand der Technik,
- **Fig. 3**: einen vergrößerten Ausschnitt III aus **Fig. 2****,**
- **Fig. 4**: eine Schnittdarstellung eines ersten Ausführungsbeispiels des erfindungsgemäßen Fädelbolzens, wobei in der rechten Hälfte der Fädelbolzen in dessen Grundposition und in der linken Hälfte der an das Fädelloch angepasste Fädelbolzen dargestellt ist,
- **Fig. 5**: eine geschnittene Draufsicht eines zweiten Ausführungsbeispiels des erfindungsgemäßen Fädelbolzens, wobei ein Zentriersegment in dessen Grundposition und ein weiteres Zentriersegment an dem Innendurchmesser des Fädellochs des Kernbleches bzw. des Kernblechstapels anliegend dargestellt sind,
- **Fig. 6**: einen Schnitt nach der Linie VI-VI in **Fig. 5** und
- **Fig. 7**: eine geschnittene Draufsicht eines dritten Ausführungsbeispiels des erfindungsgemäßen Fädelbolzens, wobei auch hier ein Zentriersegment in dessen Grundposition und ein weiteres Zentriersegment an dem Innendurchmesser des Fädellochs des Kernbleches bzw. des Kernblechstapels anliegend dargestellt sind.

In den Zeichnungen sind gleiche oder entsprechende Elemente mit jeweils gleichen Bezugszeichen versehen.

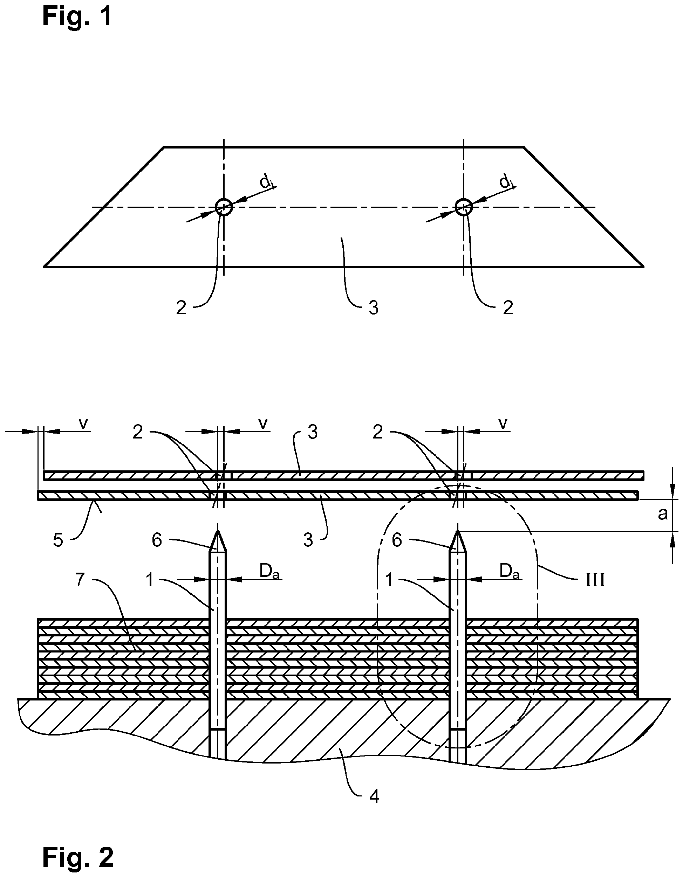

Die in **Fig. 2** bis **7** dargestellten Fädelbolzen 1 sind zum exakten Abstapeln von mit Fädellöchern 2 versehenen Blechen, insbesondere Kernblechen 3 (siehe insbesondere **Fig. 1**) von Transformatorkernen (nicht dargestellt), auf einem Kernlegetisch 4, einer Aufbauplattform, einer Palette o.dgl. (nachfolgend zur Vereinfachung nur noch Kernlegetisch genannt) vorgesehen. Dabei werden die Kernbleche 3 kontinuierlich von einer Vorratsrolle abgerollt, nachfolgend mit einer Schneidanlage auf Länge und Form geschnitten sowie daraufhin mit Fädellöchern 2 versehen, anschließend mit einer Zuführeinrichtung, an der die Kernbleche 3 magnetisch oder mittels eines Vakuums gehalten sind, dem Kernlegetisch 4 zugeführt, abgeworfen und auf demselben abgestapelt.

**Fig. 1** zeigt beispielhaft eine Form eines Kernbleches 3, wobei die Form, die Länge und die Anordnung der Fädellöcher 2 im Kernblech 3 jeweils den Erfordernissen der Transformatorkerne anzupassen sind.

Aus der **Fig. 2** geht eine positionsgerechte Stapelung von Kernblechen 3 nach dem Stand der Technik hervor. Dabei werden Fädelbolzen 1, die einen Außendurchmesser Dₐ aufweisen, der geringfügig kleiner als der Innendurchmessers d; der Fädellöcher 2 ausgebildet ist, auf bzw. in dem Kernlegetisch 4 positioniert. Mit einem Abstand a zwischen der Unterseite 5 des mittels der Zuführeinrichtung zugeführten Kernbleches 3 und einer Zentrierspitze 6 der Fädelbolzen 1 wird dasselbe abgeworfen und auf dem Kernlegetisch 4 zu einem Kernblechstapel 7 abgestapelt. Über die kegelstumpfartig ausgebildete Zentrierspitze 6 werden die Fädellöcher 2 und somit auch die Kernbleche 3 beim Abwerfen zentriert, auch wenn die Kernbleche 3 mit einem leichten seitlichen Versatz v zueinander abgeworfen werden. Zur Vermeidung von Beschädigungen an den Kernblechen 3 beim Abwerfen derselben ist die kegelstumpfartige Zentrierspitze 6 vorzugsweise abgerundet.

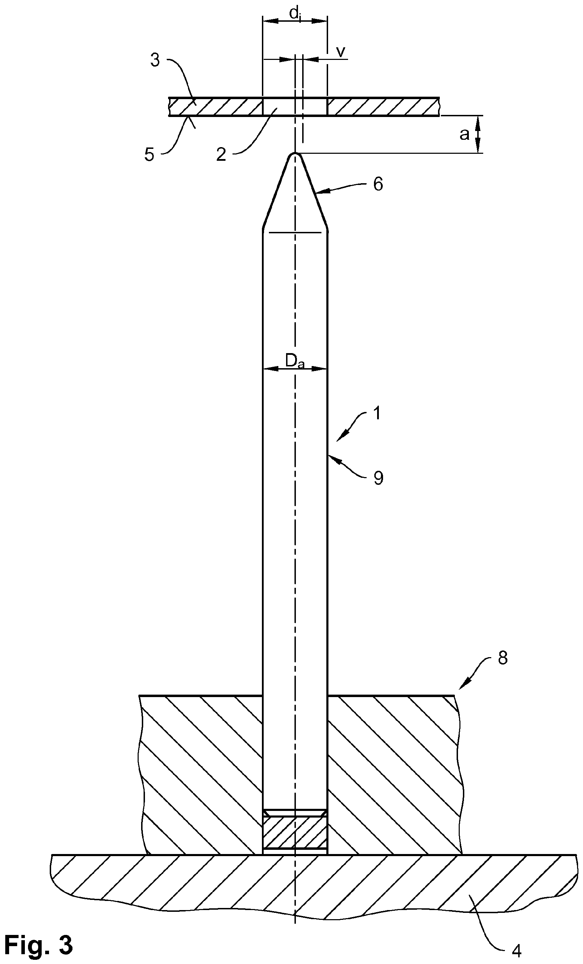

Die Fädelbolzen 1 weisen sämtlich ein mit dem Kernlegetisch 4 lösbar verbindbares Fußteil 8, einen sich oberhalb des Fußteils 8 vertikal erstreckenden Zentrierteil 9 zur Aufnahme der Kernbleche 3 sowie die am oberen Ende des Fädelbolzens 1 vorgesehene Zentrierspitze 6 auf (siehe insbesondere **Fig. 3****,** **4****,** **6** und 7).

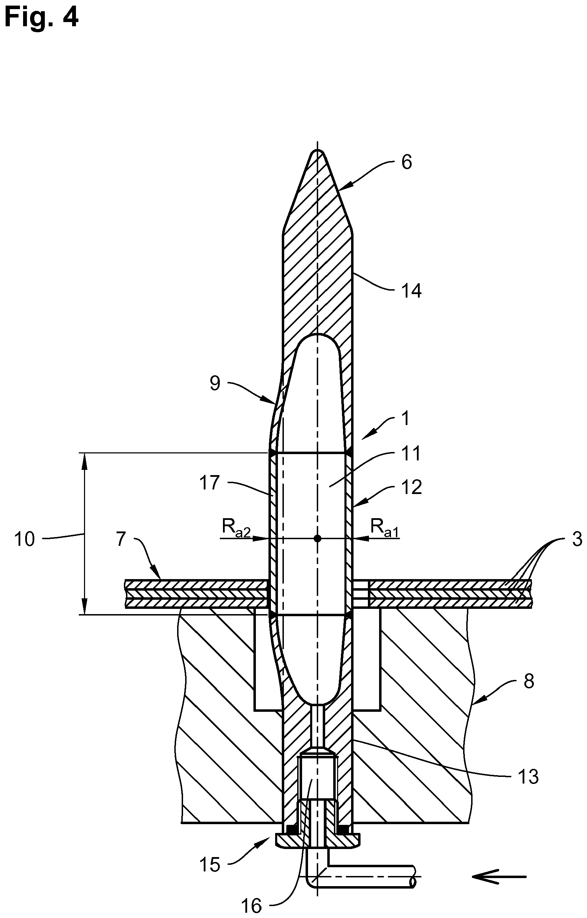

**Fig. 4** bis **7** zeigen jeweils Fädelbolzen 1, deren Außendurchmesser Dₐ an unterschiedliche Innendurchmesser d; anpassbar ausgebildet sind, wobei mindestens ein sich über einen Teilbereich des Zentrierteils 9 erstreckender, längsverlaufender Abschnitt 10 in radialer Richtung verstellbar ist.

Bei einem ersten Ausführungsbeispiel des Fädelbolzens 1 (**Fig. 4**) weist derselbe mindestens in dem sich über den Teilbereich des Zentrierteils erstreckenden Abschnitt 10 einen Hohlraum 11 auf. Dieser Hohlraum 11 kann beispielsweise durch einen Rohrabschnitt 12 mit einem Radius Rₐ₁ gebildet sein (siehe rechte Hälfte in **Fig. 4**), an dessen einen Ende ein sich in das Fußteil erstreckender Lagerteil 13 und an dessen anderen Ende ein die Zentrierspitze 6 aufweisendes Führungsteil 14 anschließen. Über eine sich vom unteren Ende 15 des Fädelbolzens 1 zu dem Hohlraum 11 erstreckende Anschlussbohrung 16 ist der Hohlraum 11 mit einem fluiden Medium, das gasförmig oder flüssig sein kann, beaufschlagbar, wobei durch den entstehenden Druck innerhalb des Hohlraums 11 die Wandung 17 des Rohrabschnitts 12 nach außen gedrückt und der Außendurchmesser Dₐ an den Innendurchmesser d; angepasst wird, woraufhin der Rohrabschnitt 12 einen Radius Rₐ₂ (=Dₐ/2) aufweist (siehe linke Hälfte in **Fig. 4**).

Um den Druck auf den Rohrabschnitt 12 relativ gering halten zu können, ist die Wandung 17 desselben vorzugsweise elastisch ausgebildet. Dabei kann der Rohrabschnitt 12 aus Segmenten gebildet sein (nicht dargestellt), wobei in den Rohrabschnitt 12 bzw. in den Hohlraum 11 eine gummiartige Blase eingesetzt ist, deren Öffnung über die Anschlussbohrung 16 mit dem fluiden Medium beaufschlagbar ist (ebenfalls nicht dargestellt).

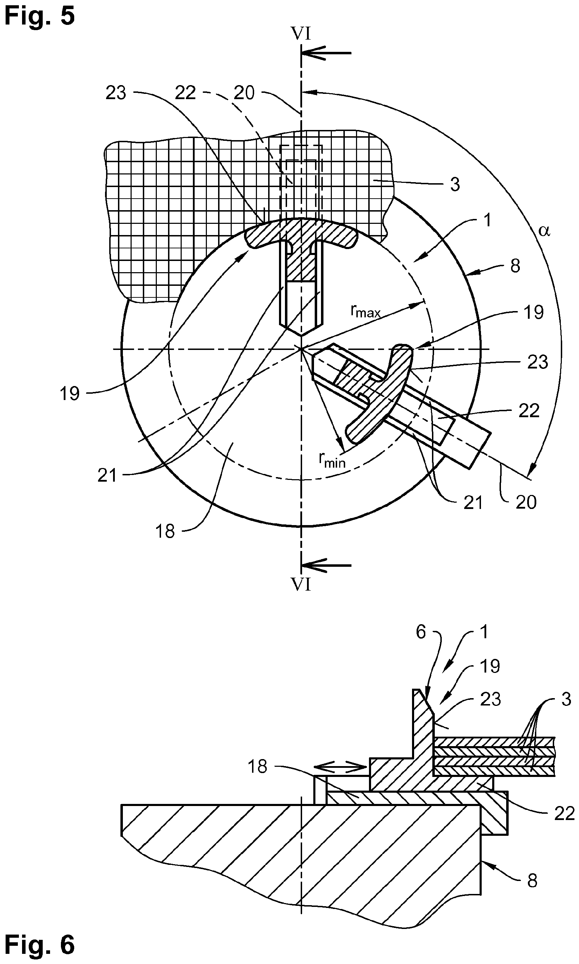

Bei einem zweiten und dritten Ausführungsbeispiel des Fädelbolzens 1 (**Fig. 5** bis **7**) ist der Zentrierteil 9 desselben aus einem auf dem Fußteil 8 angeordneten Führungsteil 18 und mindestens zwei in dem Führungsteil 18 gelagerten, in radialer Richtung verschiebbar geführten Zentriersegmenten 19 gebildet, deren Mittelachsen 20 in einem Winkel α von 120° zueinander angeordnet sind. Alternativ zu der Lagerung der Zentriersegmente 19 in dem gesonderten Führungsteil 18 können diese auch direkt in dem Fußteil 8 gelagert sein. Zur Anpassung des Außendurchmesser Dₐ des Fädelbolzens 1 an den Innendurchmesser d; der Fädellöcher 2 können die Zentriersegmente 19 ebenfalls mittels eines fluiden Medium (gasförmig oder flüssig) oder mittels mechanischer Krafteinwirkung horizontal verstellbar sein (nicht dargestellt).

Für eine exakte Führung der Zentriersegmente 19 und eine leichte Verschiebung derselben können in dem Führungsteil 18 bzw. in dem Fußteil 8 Führungselemente 21 für die Zentriersegmente 19 vorgesehen sein.

Die mechanische Krafteinwirkung auf die Zentriersegmente 19 kann beispielsweise entweder über längsverschiebbare keilförmige Elemente oder über Gelenksysteme erfolgen, die jeweils rotatorisch oder linear angetrieben bzw. verschoben werden, wobei die Gelenksysteme mehrgliedrig ausgebildet sein können (nicht dargestellt).

Zur Begrenzung der maximalen Verstellbarkeit der Zentriersegmente 19 und zur Vermeidung eines Herausgleitens der Zentriersegmente 19 aus den Führungen bzw. aus den Führungselementen 21 können Anschläge vorgesehen sein, wobei eine Rückstellung der Zentriersegmente 19 in deren innere Grundposition federbelastet erfolgen kann (ebenfalls nicht dargestellt).

Für eine saubere Ablage der Kernbleche 3 können an die Zentriersegmente 19 Blechauflagen 22 einstückig angeformt sein.

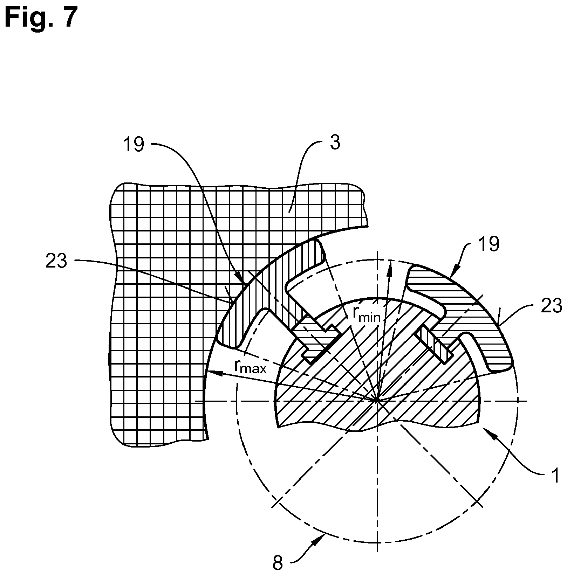

Wie bereits erwähnt zeigen **Fig. 5** und **7** die Fädelbolzen 1 nach dem zweiten und dritten Ausführungsbeispiel in Draufsicht, wobei sich jeweils ein Zentriersegment 19 in dessen Grundposition und ein weiteres Zentriersegment 19 an dem Innendurchmesser d; des Fädellochs 2 des Kernbleches 3 bzw. des Kernblechstapels 7 anliegend befindet. Da mit den Fädelbolzen 1 ein bestimmter Durchmesserbereich abgedeckt wird, kann die Grundposition der Zentriersegmente 19 mit ihren kreisabschnittsförmigen Anlageflächen 23 mit einem Radius rₘᵢₙ dem kleinsten Innendurchmesser dᵢ von Fädellöchern 2 des Durchmesserbereiches entsprechen, wobei die dargestellte ausgefahrene Position der Zentriersegmente 19 mit ihren kreisabschnittsförmigen Anlageflächen 23 mit einem Radius rₘₐₓ dem größten Innendurchmesser dᵢ von Fädellöchern 2 des Durchmesserbereiches entsprechen kann.

## Patentansprüche

1. Fädelbolzen (1) zum Abstapeln von mit mindestens einem Fädelloch (2) versehenen Blechen, insbesondere Kernblechen (3) von Transformatorkernen, auf einem Kernlegetisch (4), einer Aufbauplattform, an einer Abstapelvorrichtung o.dgl., wobei mindestens ein Fädelbolzen (1) auf dem Kernlegetisch (4), der Aufbauplattform, an der Abstapelvorrichtung o.dgl. positionierbar ist,
**dadurch gekennzeichnet,**
**dass** der Außendurchmesser (Dₐ) des Fädelbolzens (1) an unterschiedliche Innendurchmesser (dᵢ) der Fädellöcher (2) anpassbar ausgebildet ist.

2. Fädelbolzen nach Anspruch 1,
**dadurch gekennzeichnet,**
**dass** der Fädelbolzen (1) ein mit dem Kernlegetisch (4), der Aufbauplattform o.dgl. lösbar verbindbares Fußteil (8), einen sich oberhalb des Fußteils (8) vertikal erstreckenden Zentrierteil (9) und eine am oberen Ende des Fädelbolzens (1) vorgesehene Zentrierspitze (6) aufweist.

3. Fädelbolzen nach Anspruch 1 oder 2,
**dadurch gekennzeichnet,**
**dass** mindestens ein sich über einen Teilbereich des Zentrierteils (9) erstreckender, längsverlaufender Abschnitt (10) in radialer Richtung verstellbar ist.

4. Fädelbolzen nach einem der Ansprüche 1 bis 3,
**dadurch gekennzeichnet,**
**dass** der Fädelbolzen (1) mindestens in dem sich über den Teilbereich des Zentrierteils erstreckenden, längsverlaufenden Abschnitt (10) einen Hohlraum (11) aufweist, der über eine sich vom unteren Ende (15) des Fädelbolzens (1) zu dem Hohlraum (11) erstreckende Anschlussbohrung (16) zur Veränderung des Außendurchmessers (Dₐ) des Fädelbolzens (1) mit einem fluiden Medium beaufschlagbar ist.

5. Fädelbolzen nach einem der Ansprüche 1 bis 4,
**dadurch gekennzeichnet,**
**dass** die Wandung (17) des Fädelbolzens (1) in dem sich über den Teilbereich des Zentrierteils erstreckenden, längsverlaufenden Abschnitt (10) bzw. im Bereich des Hohlraums (11) elastisch ausgebildet ist.

6. Fädelbolzen nach einem der Ansprüche 1 bis 5,
**dadurch gekennzeichnet,**
**dass** der sich über den Teilbereich des Zentrierteils erstreckende, längsverlaufende Abschnitt (10) des Fädelbolzens (1) aus einzelnen längsverlaufenden Segmenten gebildet ist, wobei in den Hohlraum (11) eine gummiartige Blase einsetzbar ist, deren Öffnung über die Anschlussbohrung (16) mit dem fluiden Medium beaufschlagbar ist.

7. Fädelbolzen nach einem der Ansprüche 1 bis 3,
**dadurch gekennzeichnet,**
**dass** der Zentrierteil (9) des Fädelbolzens (1) aus einem auf dem Fußteil (8) angeordneten Führungsteil (18) und mindestens zwei in dem Führungsteil (18) gelagerten, in radialer Richtung verschiebbar geführten Zentriersegmenten (19) gebildet ist, wobei die Zentriersegmente (19) gemeinsam zur Veränderung des Außendurchmessers (Dₐ) des Fädelbolzen (1) mittels eines fluiden Mediums oder mechanischer Krafteinwirkung horizontal verstellbar sind.

8. Fädelbolzen nach einem der Ansprüche 1 bis 3,
**dadurch gekennzeichnet,**
**dass** der Zentrierteil (9) des Fädelbolzens (1) aus mindestens zwei in dem Fußteil (8) gelagerten, in radialer Richtung verschiebbar geführten Zentriersegmenten (19) gebildet ist, wobei die Zentriersegmente (19) gemeinsam zur Veränderung des Außendurchmessers (Dₐ) des Fädelbolzens (1) mittels eines fluiden Mediums oder mechanischer Krafteinwirkung horizontal verstellbar sind.

9. Fädelbolzen nach Anspruch 7 oder 8,
**dadurch gekennzeichnet,**
**dass** in dem Führungsteil (18) bzw. in dem Fußteil (8) Führungselemente (21) für die Zentriersegmente (19) vorgesehen sind.

10. Fädelbolzen nach einem der Ansprüche 7 bis 9,
**dadurch gekennzeichnet,**
**dass** radiale Mittelachsen (20) der Zentrierelemente (19) in einem Winkel (α) von 120° zueinander angeordnet sind.

11. Fädelbolzen nach einem der Ansprüche 4 bis 10,
**dadurch gekennzeichnet,**
**dass** das fluide Medium gasförmig oder flüssig ist.

12. Fädelbolzen nach einem der Ansprüche 7 bis 11,
**dadurch gekennzeichnet,**
**dass** die mechanische Krafteinwirkung auf die Zentriersegmente (19) über längsverschiebbare keilförmige Elemente erfolgt, wobei die keilförmigen Elemente rotatorisch oder linear angetrieben bzw. verschoben werden.

13. Fädelbolzen nach einem der Ansprüche 7 bis 11,
**dadurch gekennzeichnet,**
**dass** die mechanische Krafteinwirkung auf die Zentriersegmente (19) über Gelenksysteme erfolgt, wobei die Gelenksysteme rotatorisch oder linear angetrieben werden.

14. Fädelbolzen nach Anspruch 13,
**dadurch gekennzeichnet,**
**dass** die Gelenksysteme mehrgliedrig ausgebildet sind.

15. Fädelbolzen nach einem der Ansprüche 7 bis 14,
**dadurch gekennzeichnet,**
**dass** zur Begrenzung der maximalen Verstellbarkeit der Zentriersegmente (19) Anschläge vorgesehen sind.

16. Fädelbolzen nach einem der Ansprüche 7 bis 15,
**dadurch gekennzeichnet,**
**dass** eine Rückstellung der Zentriersegmente (19) in deren innere Grundposition federbelastet erfolgt.

17. Fädelbolzen nach einem der Ansprüche 4 bis 16,
**dadurch gekennzeichnet,**
**dass** die Zentriersegmente (19) einstückig an dieselben angeformte Blechauflagen (22) aufweisen.

18. Kernlegetisch (4), Aufbauplattform, Abstapelvorrichtung o.dgl. mit mindestens einem Fädelbolzen (1) nach einem der vorangehenden Ansprüche.
